# EUROPÄISCHE PATENTANMELDUNG

(11) **EP 2 463 746 A2**
(43) Veröffentlichungstag der Anmeldung: **13.06.2012**
(21) Anmeldenummer: 11009607.0
(22) Anmeldetag: 06.12.2011
(51) Int. Cl.: G06F 1/16, G06F 1/18

(54) **Terminalsystem zum Anbringen eines Endgerätes an einem Ständerwerk und zum elektrischen Koppeln des Endgerätes an ein Netzwerk oder eine Verarbeitungseinheit**

(30) Priorität: 10.12.2010 DE 102010054156
(71) Anmelder: AWEK AG, 22885 Barsbüttel (DE)
(72) Erfinder: Berger, Andreas, 33729 Bielefeld (DE); Schildhauer, Michael, 22844 Norderstedt (DE)
(74) Vertreter: Tönhardt, Marion

(57) **Zusammenfassung**

Terminalsystem zum Anbringen eines Endgerätes an einem Ständerwerk und zum elektrischen Koppeln des Endgerätes an ein Netzwerk oder eine Verarbeitungseinheit, mit einem Endgerät, gekennzeichnet durch einen Adapter, der an dem Endgerät angebracht ist, wobei mindestens eine Versorgungsleitung und/oder mindestens eine Signalleitung für das Endgerät auf einen Multipin-Verbinder zusammengeführt sind; und eine Aufnahme, welche einen Multipin-Verbinder aufweist, der dem Multipin-Verbinder des Adapters entspricht; wobei, wenn der Multipin-Verbinder des Adapters passend in elektrischem Kontakt mit dem Multipin-Verbinder der Aufnahme ist, der Adapter mit der Aufnahme gegen unberechtigten Zugriff zu verriegeln ist.

## Beschreibung

Die Erfindung betrifft ein Terminalsystem zum Anbringen eines Endgerätes an einem Ständerwerk und zum elektrischen Koppeln des Endgerätes an ein Netzwerk oder eine Verarbeitungseinheit.

Terminalsysteme werden beispielsweise als Kassensysteme im Groß- und Einzelhandel verwendet. Dabei ist in der Regel ein Endgerät, beispielsweise ein Flachbildschirm, an einem Ständerwerk angebracht, wobei das Endgerät mit einem Netzwerk, einer Verarbeitungseinheit oder dergleichen elektrisch gekoppelt ist. Der Flachbildschirm kann dabei als Berührungsbildschirm ausgebildet sein, so dass er nicht nur Anzeigefunktion, sondern auch Eingabefunktion hat und eine Tastatur weitgehend ersetzen kann. Andere Endgeräte, die bei dem erfindungsgemäßen Terminalsystem zum Einsatz kommen können, sind Computer, Drucker, Tastaturen usw. Immer muss mindestens eine Versorgungsleitung und/oder mindestens eine Signalleitung von dem Endgerät zu der Verarbeitungseinheit oder an ein Netzwerk geführt werden. Wenn ein derartiges Endgerät defekt ist und ausgetauscht oder gegen ein anderes Endgerät eingewechselt werden soll, müssen die Kabelverbindungen gelöst, das Endgerät vom Ständerwerk abmontiert und das neue Endgerät entsprechend wieder angebaut werden. Dies ist mit einem erheblichen Zeitaufwand verbunden und erfordert qualifiziertes Personal. Dies macht derartige Wartungs- und/oder Austauscharbeiten nicht nur recht kostspielig, sondern schafft auch die unangenehme Situation, dass der Arbeitsplatz, zu dem das Terminalsystem gehört, über längere Zeit nicht zu benutzen ist.

Es ist daher die Aufgabe der Erfindung, ein eingangs beschriebenes Terminalsystem zur Verfügung zu stellen, bei dem der Austausch bzw. Ersatz eines Endgerätes deutlich schneller zu bewerkstelligen ist, wobei qualifizierte Fachkräfte nicht mehr erforderlich sind.

Diese Aufgabe wird durch ein Terminalsystem nach Anspruch 1 gelöst. Vorteilhafte Ausgestaltungen sind Gegenstand der Unteransprüche.

Das erfindungsgemäße Terminalsystem zum Anbringen eines Endgerätes an einem Ständerwerk und zum elektrischen Koppeln des Endgerätes an ein Netzwerk oder eine Verarbeitungseinheit besteht im Wesentlichen aus drei Komponenten, nämlich dem Endgerät, einem Adapter, der an dem Endgerät angebracht ist, wobei mindestens eine Versorgungsleitung und/oder mindestens eine Signalleitung für das Endgerät auf einen Multipin-Verbinder zusammengeführt sind, so wie eine Aufnahme, welche einen Multipin-Verbinder aufweist, der dem Multipin-Verbinder des Adapters entspricht. Wenn nun der Multipin-Verbinder des Adapters passend in elektrischem Kontakt mit dem Multipin-Verbinder der Aufnahme ist, ist der Adapter mit der Aufnahme gegen unberechtigten Zugriff zu verriegeln.

Das erfindungsgemäße Terminalsystem ist ausgesprochen servicefreundlich. Die Montage von Endgerät und Adapter erfolgt nämlich vorab und muss nicht am Arbeitsplatz, zu dem das Terminalsystem gehört, stattfinden. Dies bedeutet insbesondere, dass auch alle elektrischen Leitungen korrekt angeschlossen sind. Um ein Endgerät auszutauschen, muss die Servicekraft lediglich die Verriegelung gegen unberechtigten Zugriff lösen und das dort befindliche Endgerät mit dem Adapter abnehmen. Dann wird das neue Endgerät zusammen mit dem daran angebrachten Adapter einfach wieder so in die Aufnahme gesetzt, dass der Multipin-Verbinder des Adapters auf dem Multipin-Verbinder der Aufnahme sitzt. Anschließend kann wieder gegen unberechtigten Zugriff verriegelt werden. Der Arbeitsplatz mit dem Terminalsystem sollte in der Regel nach wenigen Minuten wieder benutzbar sein. Hinzu kommt, dass das Austauschen durch ungelernte Kräfte, beispielsweise Kurierfahrer, erfolgen kann.

Nach einer bevorzugten Ausführungsform geschieht die Verriegelung gegen unberechtigten Zugriff durch ein mechanisches oder elektrisches Schloss. So kann daran gedacht werden, die Verriegelung durch Eingeben eines Codes freizugeben. Besonders einfach ist aber ein einheitliches mechanisches Schloss, das beispielsweise für alle Terminalsysteme eines Betriebes identisch ist. Der Schlüssel kann dann an einem gesicherten Ort aufbewahrt werden und steht im Bedarfsfall sofort zur Verfügung.

Bevorzugt weist der Adapter eine Führungshilfe für die Aufnahme auf, um den Multipin-Verbinder des Adapters passend in elektrischen Kontakt mit dem Multipin-Verbinder der Aufnahme zu bringen. Somit werden Adapter und Aufnahme geführt zusammengebracht, wobei beispielsweise am Adapter eine oder mehrere Nuten vorgesehen sind, in die entsprechend gestaltete Schienen, die an der Aufnahme vorgesehen sind, greifen. Insbesondere kann die Führungshilfe mindestens eine Nut vordefinierter Länge umfassen, in die eine komplementäre Führungsschiene der Aufnahme einzuführen ist.

Vorzugsweise weist die Nut bzw. weisen die Nuten ein geschlossenes Ende und ein offenes Ende auf, wobei das offene Ende trichterförmig aufgeweitet ist, um das Einführen der Führungsschiene(n) zu erleichtern.

Wenn die Schiene bzw. die Schienen ihre Endposition in der jeweiligen Nut erreicht hat, ist sichergestellt, dass die beiden Multipin-Verbinder in elektrischem Kontakt miteinander sind. Alsdann kann verriegelt werden.

Nach einer bevorzugten Ausführungsform ist die Nut über ihre Länge hinterschnitten. Beispielsweise kann sie im Querschnitt ein T-Profil oder ein Schwalbenschwanzprofil aufweisen. Dies trägt zur Sicherheit gegen Verkippen beim Einführen des Adapters in die Aufnahme bei.

Damit das Herausnehmen bzw. Einsetzen des Adapters kontrolliert geschieht, kann vorgesehen sein, dass zusätzlich zu der elektrischen oder mechanischen Verriegelung eine Rastverriegelung vorgesehen ist. Es sind also vorzugsweise, wenn der Multipin-Verbinder des Adapters passend in elektrischem Kontakt mit dem Multipin-Verbinder der Aufnahme ist, der Adapter und die Aufnahme im Rasteingriff. Der Rasteingriff erfolgt, sobald die Führungsschiene(n) der Aufnahme ihre Endlage in der Nut bzw. den Nuten des Adapters erreicht hat bzw. haben. Dazu kann die Führungsschiene eine Ausnehmung aufweisen, in die eine am Adapter vorgesehene Rastlasche lösbar eingreift. Diese Rastverriegelung kann beispielsweise durch entsprechende Freigabehebel für die Rastlasche(n) wieder aufgehoben werden. Wenn diese Freigabehebel ergonomisch günstig angeordnet sind, wird gleichzeitig sichergestellt, dass die Servicekraft das Endgerät vorsichtig und kontrolliert aus der Aufnahme nimmt bzw. in diese einsetzt.

Nach einer bevorzugten Ausführungsform der Erfindung ist an der Aufnahme ein weiteres Montagesystem, z.B. ein Rohr angebracht, durch das die vom Multipin-Verbinder abgehenden Leitungen als Kabel aus der Aufnahme herausgeführt werden. Das Rohr kann dann auf übliche Weise, beispielsweise über einen Schwenkverbinder, an einem Ständerwerk angebracht werden.

Das erfindungsgemäße Terminalsystem bietet noch eine ganz andere Möglichkeit, dass nämlich das Endgerät als mobiles Gerät verwendet werden kann. Dies ist zum Beispiel dann hilfreich, wenn sich an einem Kassenplatz eine lange Schlange gebildet hat. Ein Mitarbeiter kann dann diese Schlange auflösen, indem er die Waren schon in das Endgerät aufnimmt. Dank des universellen Adapters kann dann irgendein anderer Kassenplatz zum Abrechnen verwendet werden, wobei dann das mobil verwendete Endgerät in die entsprechende Aufnahme eingesetzt wird.

In einer typischen Lebensmittelfiliale gibt es verschiedene Geräte diverser Hersteller. Es finden sich beispielsweise Preisinformationsterminals, Kassensysteme und Waagen. Insbesondere bei Waagen sind vielfältige Einsatzbereiche denkbar. Sie werden im Obst- und Gemüsebereich als Kundenwaagen und im Bereich der Wurst- und/oder Käsetheke als Bedienwaagen eingesetzt.

Jedes dieser Geräte hat im Prinzip eine vergleichbare Elektronik, um die Softwarekompatibilität zu gewährleisten. Unterschiede gibt es lediglich bei einzelnen Peripherie-Elementen. So benötigt beispielsweise eine Waage eine Wiegezelle, ein Kundenscanner einen Barcode-Leser.

Das erfindungsgemäße Terminalsystem macht es nun möglich, die Basiselektronik auszutauschen, indem der universelle Adapter in der entsprechenden Umgebung verwendet wird. Wird beispielsweise an eine Wiegezelle mit Drucker angedockt, wird eine Waage beispielsweise für die Obst- und Gemüseabteilung betriebsbereit gemacht. Wird eine Dockingstation mit Barcode-Leser angekoppelt, steht ein Preisinformationsterminal zur Verfügung. In Verbindung mit einem Check-out-Tisch wird das schon beschriebene Kassensystem erzeugt.

Da die unterschiedlichen Geräte für die Filiale auch unterschiedlich wichtig sind, kann man mit der vorliegenden Erfindung neue Servicekonzepte gestalten. Üblicherweise hat die Kasse in einer Filiale immer die höchste Priorität, ein Preisabfrageterminal die niedrigste. Fällt normalerweise ein Kassensystem aus, wird dieses zwar in der Regel innerhalb weniger Stunden von dem zuständigen Servicepartner repariert. Allerdings sind die Serviceverträge sehr teuer. Die Erfindung löst das Problem auf einfache Weise. Wenn ein Kassensystem ausfällt, nimmt der Händler einfach das Endgerät des im Moment weniger wichtigen Preisinformationsterminals, koppelt es erfindungsgemäß an und hat so sein Kassensystem innerhalb weniger Minuten wieder betriebsbereit.

Mit der Erfindung kann auch dem Kundenverhalten Rechnung getragen werden. Das Kundenverhalten in einem Supermarkt ist zu verschiedenen Zeiten unterschiedlich. Samstags wollen die Kunden in der Regel nur schnell ihre Einkäufe tätigen. An anderen Tagen steht das Einkaufserlebnis im Vordergrund. Mit dem Terminalsystem gemäß der vorliegenden Erfindung kann auch hier einfach Abhilfe geschaffen werden, indem beispielsweise das Endgerät eines Preisinformationsterminals, wie auch schon oben beschrieben, bei starkem Kundenaufkommen als zusätzliche Kasse eingesetzt wird.

Im Folgenden soll die Erfindung anhand der beigefügten Zeichnung näher erläutert werden. Es zeigt:
- Figur 1: einen Adapter mit daran angebrachtem Endgerät zur Verwendung bei einem Terminalsystem gemäß der vorliegenden Erfindung;
- Figur 2: das Endgerät mit dem Adapter aus Figur 1 vor dem Einsetzen in eine Aufnahme;
- Figur 3: ein komplettes Terminalsystem gemäß einer Ausführungsform der vorliegenden Erfindung, das zur Montage an einem Ständerwerk vorbereitet ist;
- Figur 4: eine perspektivische Darstellung der Situation gemäß Figur 4, bei der die Kabelführung aus dem Terminalsystem heraus deutlich wird; und
- Figur 5: das erfindungsgemäße Terminalsystem in Verbindung mit einem Ständerwerk.

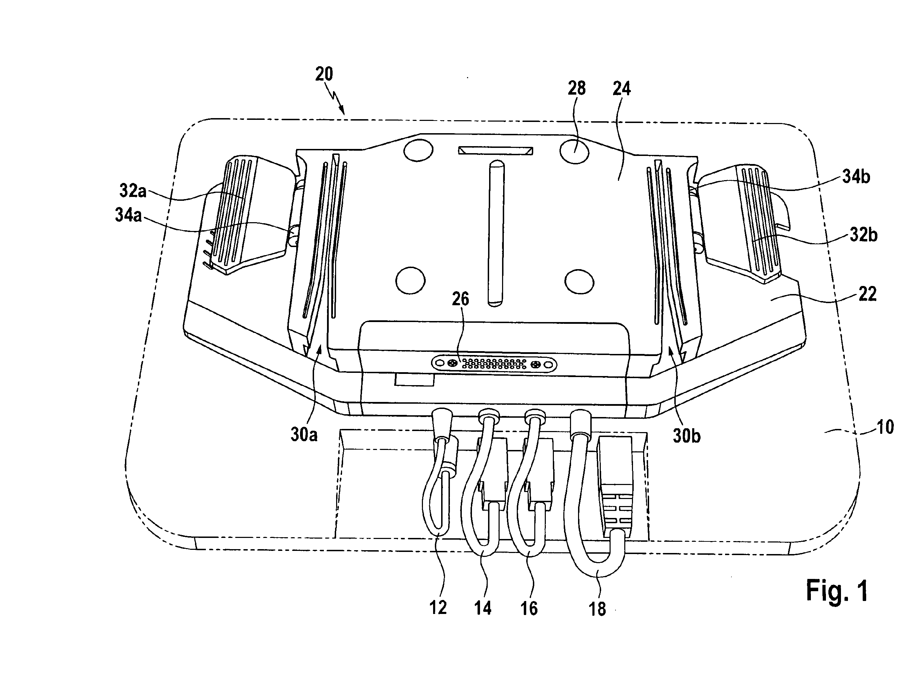

Figur 1 zeigt in einer perspektivischen Ansicht von oben ein Endgerät 10, beispielsweise einen Flachbildschirm, der über eine Versorgungsleitung 12 mit Energie versorgt wird, wobei Daten, in diesem Fall über die Signalleitungen 14, 16, 18 , transportiert werden können. Es müssen nicht alle Signalleitungen verwendet werden, einige Signalleitungen können für andere Endgeräte, beispielsweise einen Drucker freigehalten sein. Damit wird die Universalität des erfindungsgemäßen Terminalsystems gewährleistet. Auch ist es denkbar, dass eine kombinierte Versorgungs- und Signalleitung zum Einsatz kommt. Wesentlich ist, dass die Versorgungsleitung und/oder die Signalleitungen Bestandteil eines Adapters 20 sind, der aus einem Adapterkörper 22 und einem darauf aufgesetzten Führungsblock 24 aufgebaut ist. Im Adapterkörper 22 werden die Versorgungsleitung 12 und die Signalleitungen 14, 16, 18 auf einen Multipin-Verbinder 26 geführt. Bei bestimmungsgemäß aufrecht angeordnetem Endgerät würde der Multipin-Verbinder 26 nach unten, also zum Boden, weisen. Hierdurch wird sichergestellt, dass der elektrische Kontakt des Multipin-Verbinders 26 mit dem noch zu beschreibenden Multipin-Verbinder der Aufnahme durch die Schwerkraft unterstützt wird. Der Führungsblock 24 ist im Wesentlichen quaderförmig und weist an zwei gegenüber liegenden Seiten Nuten 30a, 30b auf. Diese Nuten 30a, 30b erstrecken sich fast vollständig über die gesamte Länge der Seiten. Sie sind an ihrem im Multipin-Verbinder 26 benachbart liegenden offenen Ende aufgeweitet, um das Einführen von Führungsschienen, die hiernach noch beschrieben werden, zu erleichtern. Die gegenüber liegenden Enden der Nuten 30a, 30b sind geschlossen, so dass für die Führungsschienen eine bestimmte Endlage definiert ist. Wie hiernach noch genauer beschrieben ist, können die Führungsschienen verrastet werden, wobei der Rasteingriff durch Freigabehebel 32a, 32b, die um eine Achse 34a, 34b schwenkbar sind und in die Position des Rasteingriffs vorbelastet sind, wieder aufgehoben werden.

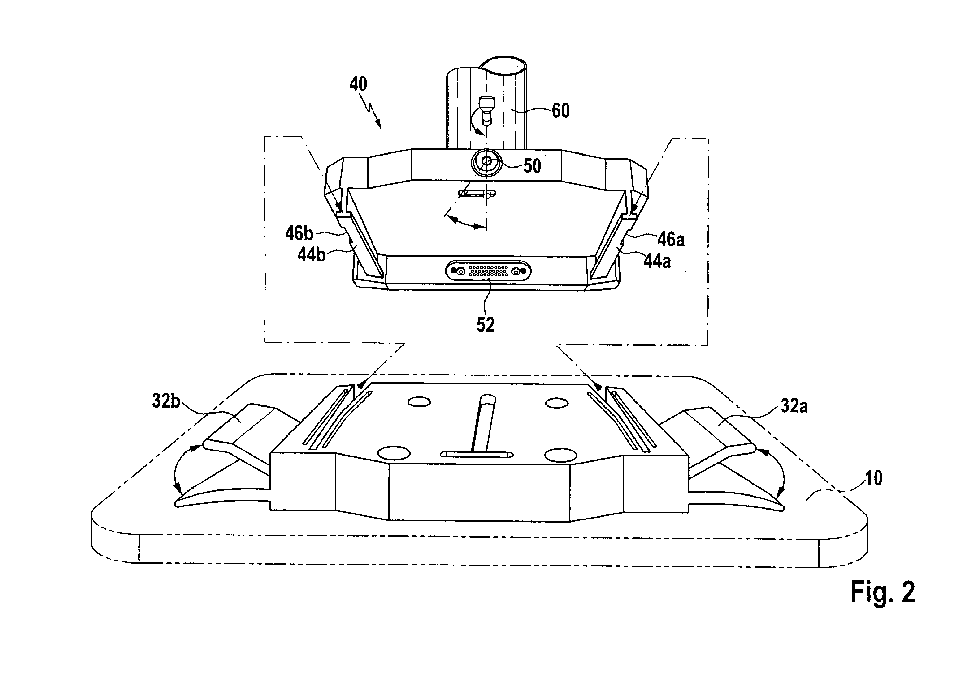

Figur 2 zeigt das Endgerät 10 mit dem Adapter 20 aus Figur 1 vor dem Einsetzen in eine Aufnahme 40. Dabei ist an der Aufnahme zur Vorbereitung des Anbringens an ein Ständerwerk bereits ein Rohr 60 mit einem Schwenkelement 62 montiert ist. Die Aufnahme 40 besteht aus einem Aufnahmekörper 42, von dem zwei Führungsschienen 44a, 44b hervorragen, welche einen T-förmigen Querschnitt haben. Die Führungsschienen 44a und 44b sind entsprechend den Führungsnuten 30a, 30b im Führungsblock 24 des Adapters 20 beabstandet. Da die Aufnahme 40 letztendlich an einem Ständerwerk angebracht wird, ist diese stationär. Dabei ist sie so angeordnet, dass die Führungsschienen 44a und 44b im Wesentlichen senkrecht verlaufen, so dass der Adapter 20 mit dem Endgerät 10 praktisch "von oben" so zur Aufnahme 40 gebracht wird, dass die Führungsschienen 44a, 44b in die Nuten 30a, 30b greifen können, wie es durch die strichlierten Pfeile dargestellt ist. Der Adapter 20 mit dem Endgerät 10 wird dann abgesenkt, bis der Multipin-Verbinder des Adapters 20 - in dieser Zeichnung nicht zu sehen - auf dem Multipin-Verbinder 52 der Aufnahme 40 sitzt. In dieser Stellung rastet eine Rastverbindung hörbar ein. Dabei werden die Führungsschienen 44a, 44b mittels zweier Rastlaschen (nicht gezeigt), die in entsprechende Ausnehmungen 46a, 46b an den Führungsschienen 44a, 44b ragen, verriegelt. Mittels eines Freigabehebels 32a, 32b kann der Rasteingriff wieder aufgehoben werden. Obwohl grundsätzlich nur ein Freigabehebel 32 erforderlich wäre - die Führungs- und Kontaktfunktion bleibt erhalten, selbst wenn die zweite Führungsschiene 44b in der Nut 30b nicht verriegelt würde -, ist es aus ergonomischen Gründen vorteilhaft, symmetrisch zu verrasten und auch zwei Freigabehebel 32a und 32b vorzusehen. Der Adapter 20 mit dem Endgerät 10 kann anschließend mit Hilfe des Schlosses 50 gegen unberechtigten Zugriff gesichert werden.

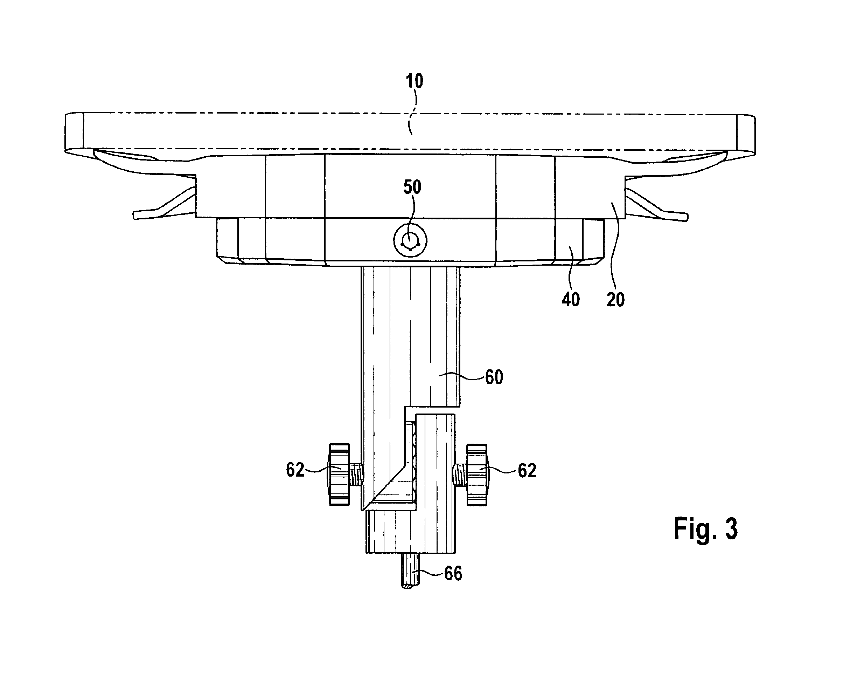

Figur 3 zeigt den in die Aufnahme 40 gesetzten Adapter 20 mit daran angebrachtem Endgerät 10. Adapter 20 und Aufnahme 40 sind mit Hilfe eines Schlosses 50 verriegelt. Zwar können die Freigabehebel 32a, 32b betätigt werden, sie zeigen aber keine Wirkung, da das Schloss 50 den Adapter 20 gegen das Herausschieben sichert. Die vom Multipin-Verbinder in die Aufnahme 40 abgehenden Leitungen werden zu einem Kabel 66 vereinigt, das durch das Rohr 60 geführt wird. Hierdurch wird der so genannte "Kabelsalat" vollständig vermieden. Das Kabel 66 wird bei der ersten Montage durch das Ständerwerk bzw. das Rohr 60 herangeführt, anschließend wird das Rohr 60 an der Aufnahme 40 befestigt und die Leitungen des Kabels 66 werden an ihre richtigen Anschlüsse am Multipin-Verbinder geführt.

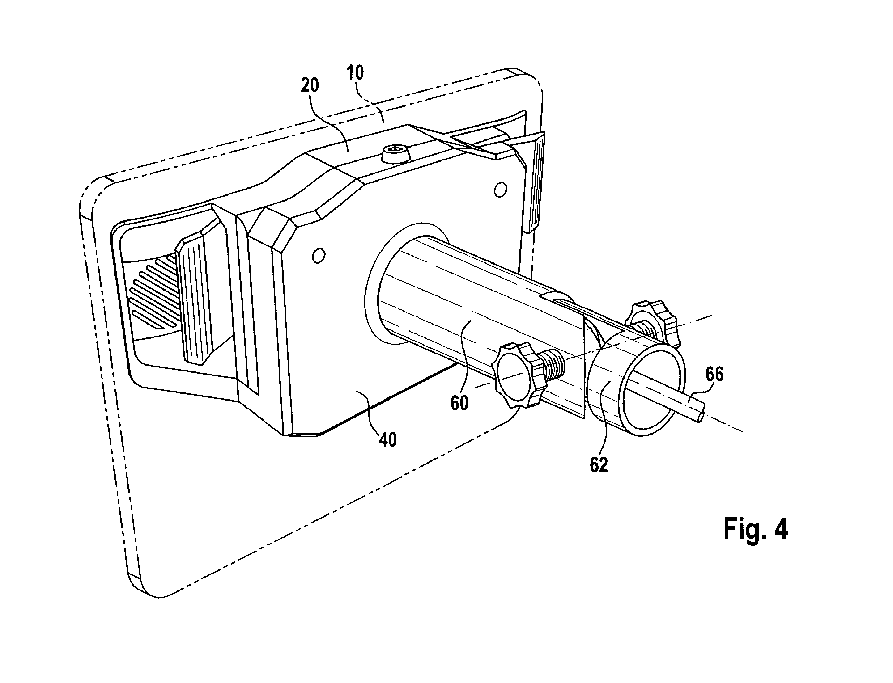

Wie in der Figur 4 zu sehen ist, ist als Montagesystem ein Rohr 60, das von der Aufnahme 40 zum Ständerwerk führt, recht kurz und endet an dem Schwenkelement 62, so dass die Winkellage des erfindungsgemäßen Terminalsystems in Bezug auf den Benutzer optimiert werden kann. Mit Hilfe von Stellschrauben wird die Lage dann fixiert.

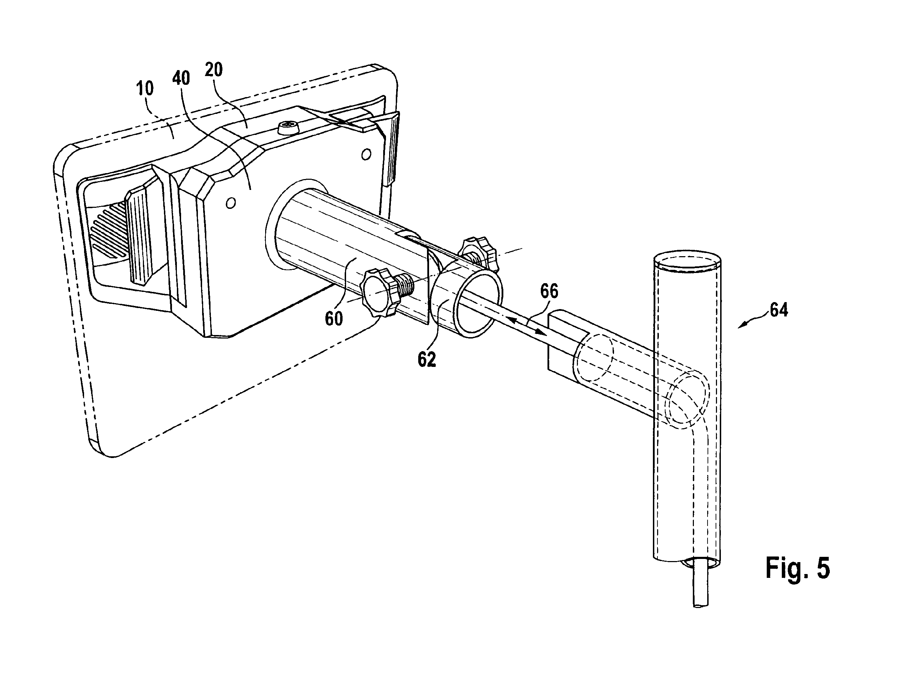

Schließlich zeigt Figur 5 die Anbindung an das eigentliche Ständerwerk 64, wobei einfach ein Anschlussrohr in das Schwenkelement 62 eingeschoben wird. Die Länge des Kabels 66 verschwindet dabei im Ständerwerk 64.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Terminalsystem zum Anbringen eines Endgerätes an einem Ständerwerk und zum elektrischen Koppeln des Endgerätes an ein Netzwerk oder eine Verarbeitungseinheit, mit
- einem Endgerät (10);
**gekennzeichnet durch**
- einen Adapter (20), der an dem Endgerät (10) angebracht ist, wobei mindestens eine Versorgungsleitung (12) und/oder mindestens eine Signalleitung (14, 16, 18) für das Endgerät (10) auf einen Multipin-Verbinder (26) zusammengeführt sind; und
- eine Aufnahme (40), welche einen Multipin-Verbinder (52) aufweist, der dem Multipin-Verbinder (26) des Adapters (20) entspricht;
wobei, wenn der Multipin-Verbinder (26) des Adapters (20) passend in elektrischem Kontakt mit dem Multipin-Verbinder (52) der Aufnahme (40) ist, der Adapter (20) mit der Aufnahme (40) gegen unberechtigten Zugriff zu verriegeln ist.

2. Terminalsystem nach Anspruch 1, **dadurch gekennzeichnet, dass** der Adapter (20) mit der Aufnahme (40) durch ein mechanisches, elektrisches oder elektronisches Schloss (50) zu verriegeln ist.

3. Terminalsystem nach Anspruch 1, **dadurch gekennzeichnet, dass** der Adapter (20) eine Führungshilfe (30a, 30b) für die Aufnahme (40) aufweist, um den Multipin-Verbinder (26) des Adapters (20) passend in elektrischen Kontakt mit dem Multipin-Verbinder (52) der Aufnahme (40) zu bringen.

4. Terminalsystem nach Anspruch 3, **dadurch gekennzeichnet, dass** die Führungshilfe (30a, 30b) mindestens eine Nut vordefinierter Länge umfasst, in die eine komplementäre Führungsschiene (44a, 44b) der Aufnahme 40 einzuführen ist.

5. Terminalsystem nach Anspruch 4, **dadurch gekennzeichnet, dass** die Nut (30a, 30b) ein geschlossenes Ende und ein offenes Ende aufweist, wobei das offene Ende trichterförmig aufgeweitet ist.

6. Terminalsystem nach Anspruch 3 oder 4, **dadurch gekennzeichnet, dass** die Nut (30a, 30b) über ihre Länge hinterschnitten ist.

7. Terminalsystem nach Anspruch 1, **dadurch gekennzeichnet, dass**, wenn der Multipin-Verbinder (26) des Adapters (20) passend in elektrischem Kontakt mit dem Multipin-Verbinder (52) der Aufnahme (40) ist, der Adapter (20) und die Aufnahme (40) im Rasteingriff sind.

8. Terminalsystem nach Anspruch 7, **dadurch gekennzeichnet, dass** der Rasteingriff durch Sperren mindestens einer der Führungsschienen (44a, 44b) in ihrer Endlage in der Nut (30a, 30b) erfolgt.

9. Terminalsystem nach Anspruch 8, **dadurch gekennzeichnet, dass** die Führungsschiene (44a, 44b) eine Ausnehmung (46a, 46b) aufweist, in die eine am Adapter (20) vorgesehene Rastlasche lösbar eingreift.

10. Terminalsystem nach Anspruch 1, **dadurch gekennzeichnet, dass** an der Aufnahme (40) ein weiteres Montagesystem angebracht ist, durch das die vom Multipin-Verbinder (52) abgehenden Leitungen als Kabel (66) aus der Aufnahme herausgeführt sind.
